# EUROPÄISCHE PATENTSCHRIFT

(11) **EP 2 796 769 B1**
(45) Veröffentlichungstag und Bekanntmachung des Hinweises auf die Patenterteilung: **11.10.2017**
(21) Anmeldenummer: 14165838.5
(22) Anmeldetag: 24.04.2014
(51) Int. Cl.: F21S 6/00, F21S 8/06, F21V 7/00, F21V 8/00, F21Y 115/10

(54) **LED-Leuchte mit einer Lichtleiter-Anordnung**
LED light with a light conductor assembly
Lampe à DEL dotée d'un système de conducteurs lumineux

(30) Priorität: 26.04.2013 DE 102013207716
(43) Veröffentlichungstag der Anmeldung: 29.10.2014
(73) Patentinhaber: Zumtobel Lighting GmbH, 6850 Dornbirn (AT)
(72) Erfinder: Gassner, Patrik, 6722 St. Gerold (AT); Ladstätter, Gerald, 6833 Klaus (AT); Ludwiczak, Bogna, 88145 Opfenbach (DE)
(74) Vertreter: Thun, Clemens

(56) Entgegenhaltungen:
- DE-A1- 19 910 273
- US-A1- 2004 213 008
- US-A1- 2006 227 551
- US-A1- 2010 046 217
- US-A1- 2010 046 219
- US-A1- 2010 110 673
- US-A1- 2010 128 487
- US-A1- 2011 069 508
- US-A1- 2011 167 690

## Beschreibung

Die Erfindung betrifft eine Leuchte mit einer LED-Lichtquelle und einer Lichtleiter-Anordnung.

Aus dem Stand der Technik sind Pendelleuchten bekannt, die Licht einerseits in den unteren Halbraum zur Erzeugung einer Direkt-Beleuchtung abgeben und andererseits in den oberen Halbraum zur Erzeugung einer Indirekt-Beleuchtung. Die Direkt-Beleuchtung dient beispielsweise zur Beleuchtung eines Arbeitsbereichs, die Indirekt-Beleuchtung zur Beleuchtung einer Umgebung des Arbeitsbereichs.

Wenn bei einer derartigen Pendelleuchte als Lichtquelle eine Leuchtstofflampe verwendet wird, beispielsweise in Form einer T16 Lampe, so kann das von der Leuchtstofflampe abgestrahlte Licht in einfacher Weise sowohl für die Lichtabgabe nach oben, als auch für die Lichtabgabe nach unten verwendet werden, denn eine Leuchtstofflampe strahlt Licht im Allgemeinen in einen Raumwinkel ab, der größer als ein Halbraum ist. Eine stabförmige Leuchtstofflampe beispielsweise gibt Licht radial betrachtet über ihren gesamten Umfang hinweg ab.

In jüngerer Zeit werden bei Leuchten zunehmend LEDs (LED: Licht emittierende Diode) anstelle von Leuchtstofflampen als Lichtquellen verwendet, da LEDs gegenüber Leuchtstofflampen diverse Vorteile haben, wie beispielsweise eine längere Lebensdauer. Allerdings unterscheidet sich eine LED von einer Leuchtstofflampe in ihrer Lichtabgabe. Üblicherweise ist eine LED auf einer Platine montiert und gibt Licht maximal in denjenigen Raumwinkel ab, der durch die umgebende Platinenoberfläche begrenzt ist. Daher werden bei entsprechenden LED-Pendelleuchten mindestens zwei Platinen für die LEDs verwendet, eine Platine für die LEDs, die zur Erzeugung der Direkt-Beleuchtung dienen und eine weitere Platine für die LEDs, die zur Erzeugung der Indirekt-Beleuchtung dienen. Die beiden Platinen sind dementsprechend unterschiedlich orientiert angeordnet. Der Aufwand zur Herstellung einer solchen Pendelleuchte ist dadurch erhöht.

Aus der US 2010/0046219 A1 ist eine Leuchtanordnung mit einer LED-Lichtquelle und einem plattenartigen Lichtleiter bekannt. Die LED-Lichtquelle ist in einer Ausnehmung des Lichtleiters eingesetzt.
Aus der US 2010/0046217 A1 ist eine Stehleuchte bekannt, bei der das Licht einer LED-Lichtquelle teils direkt, teils über einen Lichtleiter in den unteren Halbraum abgegeben wird.
Aus der US 2010/0128487 A1 ist eine Beleuchtungsanordnung mit einer Lichtleiterplatte und einer LED-Lichtquelle bekannt. Die Lichtleiterplatte weist eine Durchgangsöffnung auf, durch die das Licht der LED-Lichtquelle hindurch strahlt. Außerdem wird ein Teil des Lichts in die Lichtleiterplatte eingekoppelt und über einen strukturierten Oberflächenbereich des Lichtleiters nach außen abgegeben.

Aus der US 2006/0227551 A1 und der US 2010/0110673 A1 ist eine Leuchtanordnung mit einer Lichtleiterplatte bekannt, in der ein Schlitz zur Lichtabschattung ausgebildet ist.

Der Erfindung liegt die Aufgabe zugrunde, wie offenbart im Anspruch 1, eine verbesserte LED-Leuchte anzugeben. Insbesondere soll die Leuchte bei vorteilhaften Herstellungsbedingungen verbesserte Gestaltungsmöglichkeiten mit Bezug auf die Richtungsabhängigkeit der Lichtabgabe eröffnen.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.
Gemäß der Erfindung ist eine Leuchte in Form einer Pendel- oder Stehleuchte vorgesehen, die eine LED-Lichtquelle zur Abstrahlung eines Lichts aufweist, sowie eine flächige, plattenartige Lichtleiter-Anordnung. Die Lichtleiter-Anordnung weist dabei eine Öffnung auf und die LED-Lichtquelle ist derart angeordnet, dass ein erster Teil des Lichts über die Öffnung nach unten abgegeben wird und ein zweiter Teil des Lichts über einen Umfangsrand der Öffnung in die Lichtleiter-Anordnung eingekoppelt wird und im Weiteren über eine Flachseite der Lichtleiter-Anordnung nach oben abgegeben wird.
Durch diese Gestaltung lässt sich insbesondere erzielen, dass das Licht der LED-Lichtquelle in entgegengesetzte Richtungen abgegeben werden kann. Beispielsweise kann vorgesehen sein, dass das von der LED-Lichtquelle abgestrahlte Licht von der Leuchte sowohl für die Erzeugung einer Direkt-Beleuchtung, als auch für die Erzeugung einer Indirekt-Beleuchtung verwendet wird, ohne dass hierfür mehrere, unterschiedlich orientierte LED-Lichtquellen erforderlich wären.

Vorzugsweise ist die LED-Lichtquelle zumindest teilweise innerhalb der Öffnung angeordnet. Hierdurch ist eine besonders raumsparende Anordnung ermöglicht. Vorzugsweise ist die Leuchte derart gestaltet, dass der erste Teil des Lichts zur Erzeugung einer Direkt-Beleuchtung vorgesehen ist und der zweite Teil des Lichts zur Erzeugung einer Indirekt-Beleuchtung. Die beschriebene Gestaltung eignet sich hierfür in besonderem Maße.

Vorzugsweise ist die Lichtleiter-Anordnung profilförmig gestaltet. Dies ist mit Bezug auf den Herstellungsaufwand der Leuchte vorteilhaft.

Vorzugsweise weist die Lichtleiter-Anordnung eine Auskoppelstruktur zur Auskopplung des zweiten Teils des Lichts über die Flachseite auf, wobei die Auskoppelstruktur vorzugsweise profilartig gestaltet ist. Hierdurch ist bei geringem Herstellungsaufwand eine besonders geeignete Auskopplung des Lichts über die Flachseite ermöglicht.

Vorzugsweise ist die Lichtleiter-Anordnung einstückig ausgebildet. Dies ist mit Bezug auf den Herstellungsaufwand der Leuchte vorteilhaft.

Erfindungsgemäß weist die Lichtleiter-Anordnung einen ersten plattenförmigen Teilbereich und einen zweiten plattenförmigen Teilbereich auf, wobei die Öffnung durch einen Spalt zwischen dem ersten plattenförmigen Teilbereich und dem zweiten plattenförmigen Teilbereich gebildet ist. Dabei weist die Lichtleiter-Anordnung außerdem einen Mittelteil auf, der ein optisches Element zur optischen Beeinflussung des ersten Teils des Lichts bildet, wobei das optische Element eine Linse und/oder einen Reflektor umfasst. Auf diese Weise lässt sich die Lichtleiter-Anordnung besonders vorteilhaft gestalten.

Die Erfindung wird im Folgenden anhand von Ausführungsbeispielen und mit Bezug auf die Zeichnungen näher erläutert. Es zeigen:
- Fig. 1: eine Skizze zum Prinzip der Erfindung,
- Fig. 2: eine Querschnitt-Skizze zu einem ersten Ausführungsbeispiel einer erfindungsgemäßen Leuchte,
- Fig. 3: eine Querschnitt-Skizze zu einem zweiten Ausführungsbeispiel einer erfindungsgemäßen Leuchte und
- Fig. 4: eine Skizze einer Aufsicht auf einen Teilbereich der Leuchte gemäß dem zweiten Ausführungsbeispiel.

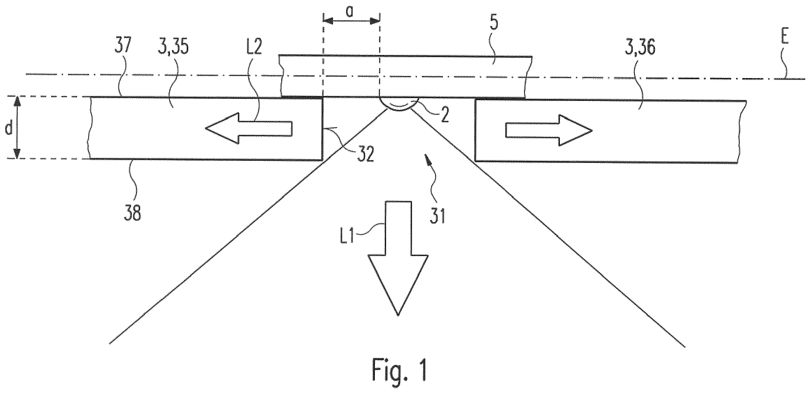

In Fig. 1 ist eine Skizze zum Prinzip der Erfindung dargestellt. Eine erfindungsgemäße Leuchte weist eine LED-Lichtquelle 2 auf. Die LED-Lichtquelle 2 kann lediglich eine LED aufweisen oder mehrere LEDs. Die LED-Lichtquelle 2 ist vorzugsweise, wie an sich bekannt, auf einer Platine 5 angeordnet. Die Platine 5 ist dabei vorzugsweise plan gestaltet, so dass durch ihre Form eine Ebene E festgelegt ist, wie in Fig. 1 angedeutet.

Die Platine 5 kann dabei grundsätzlich beliebig gegenüber der Vertikalen orientiert sein. Im Folgenden wird davon ausgegangen, dass die Platine 5 horizontal ausgerichtet ist, wenn die Leuchte wie für einen Betrieb vorgesehen ausgerichtet ist, wobei die LED-Lichtquelle 2 an einer Unterseite der Platine 5 angeordnet ist. Für eine andersartige Ausrichtung der Leuchte sind die folgenden Richtungsangaben etc. entsprechend umzudeuten. Die LED-Lichtquelle 2 ist zur Abstrahlung eines **Lichts** ausgestaltet, so dass bei der genannten Ausrichtung eine Lichtabgabe nach unten bzw. in den unteren Halbraum vorgesehen ist.

Die erfindungsgemäße Leuchte umfasst weiterhin eine Lichtleiter-Anordnung 3. Diese Lichtleiteranordnung 3 weist eine Öffnung 31 auf. Bei der Öffnung 31 kann es sich beispielsweise um einen Schlitz handeln oder um eine lochartige Durchgangsöffnung. Dementsprechend ist ein Umfangsrand 32 der Öffnung 31 durch die Lichtleiter-Anordnung 3 gebildet.

Vorzugsweise ist die LED-Lichtquelle 2 zumindest teilweise innerhalb der Öffnung 31 angeordnet. Insbesondere ist eine Lichtabstrahlfläche der LED-Lichtquelle 2, also praktisch die LED bzw. die LEDs innerhalb der Öffnung 31 angeordnet. Hierzu ist die Gestaltung vorteilhaft so, dass die Platine 5 unmittelbar an den Umfangsrand 32 angrenzt, wie in Fig. 1 angedeutet. Der Umfangsrand 32 ist vorzugsweise durch einen vertikalen Wandbereich der Lichtleiter-Anordnung 3 gebildet.

Die Anordnung ist so gestaltet, dass ein erster Teil *L1* des Lichts, das von der LED-Lichtquelle 2 abgestrahlt wird, über die Öffnung 31 abgegeben wird und ein zweiter Teil *L2* des Lichts, das von der LED-Lichtquelle 2 abgestrahlt wird, über den Umfangsrand 32 der Öffnung 31 in die Lichtleiter-Anordnung 3 eingekoppelt wird und im Weiteren über eine Flachseite 37, 38 der Lichtleiter-Anordnung 3 abgegeben wird.

Im gezeigten Beispiel wird also der erste Teil *L1* des Lichts über die Öffnung 31 nach unten abgegeben. Der zweite Teil *L2* des Lichts wird durch Lichtstrahlen von der LED-Lichtquelle 2 erzeugt, die demgegenüber flacher verlaufen.

Die Flachseite, über die der zweite Teil *L2* des Lichts abgegeben wird, kann beispielsweise eine nach oben weisende Flachseite der Lichtleiter-Anordnung 3 sein, wie in Fig. 1 durch das Bezugszeichen 37 angedeutet oder eine nach unten weisende Flachseite der Lichtleiter-Anordnung 3, wie durch das Bezugszeichen 38 angedeutet.

Im gezeigten Beispiel sind die beiden beispielhaft genannten Flachseiten 37, 38 horizontal orientiert.

Die Abgabe des zweiten Teils *L2* des Lichts kann also nach oben und/oder nach unten vorgesehen sein.

Die Lichtleiter-Anordnung 3 ist zumindest in einer Umgebung der Öffnung 31 vorzugsweise plattenförmig, wobei sie in dieser Umgebung eine Dicke *d* aufweist. Dabei erstreckt sie sich in dieser Umgebung vorteilhaft parallel zu der Ebene *E*, also im gezeigten Beispiel horizontal. Zwischen einer Lichtabstrahlfläche der LED-Lichtquelle 2, von der das Licht abgestrahlt wird und der Lichtleiter-Anordnung 3 ist vorzugsweise ein - hier horizontaler - Abstand *a* gegeben.

Die Dicke *d* und der Abstand *a* bilden somit Parameter der Anordnung, die bei der Gestaltung der Leuchte variiert werden können. Dabei lässt sich vorteilhaft erzielen, dass durch die Variation dieser beiden Parameter Dicke *d* und Abstand *a* das Verhältnis des ersten Teils *L1* des Lichts zum zweiten Teil *L2* des Lichts gezielt verändert werden kann. Die entsprechenden Lichtmengen lassen sich auf diese Weise "einstellen".

Besonders eignet sich die Anordnung beispielsweise im Fall einer Leuchte, die derart gestaltet ist, dass der erste Teil *L1* des Lichts zur Erzeugung einer Direkt-Beleuchtung vorgesehen ist und der zweite Teil *L2* des Lichts zur Erzeugung einer Indirekt-Beleuchtung. In diesem Fall lässt sich durch entsprechende Wahl der genannten Parameter Dicke *d* und Abstand *a* das Verhältnis von direkter zu indirekter Lichtmenge festlegen. Bei einer solchen Leuchte kann es sich beispielsweise um eine Pendelleuchte handeln oder auch um eine Stehleuchte.

Vorzugsweise kann dabei weiterhin vorgesehen sein, dass die Leuchte noch ein (in Fig. 1 als solches nicht gezeigtes) optisches Element zur Beeinflussung des ersten Teils *L1* des Lichts aufweist, beispielsweise um für die Direkt-Beleuchtung einen Lichtkegel mit einem bestimmten Öffnungswinkel zu erzielen, also beispielsweise zur Erzielung einer bestimmten Entblendung. Das optische Element kann beispielsweise eine Linse und/oder einen Reflektor umfassen.

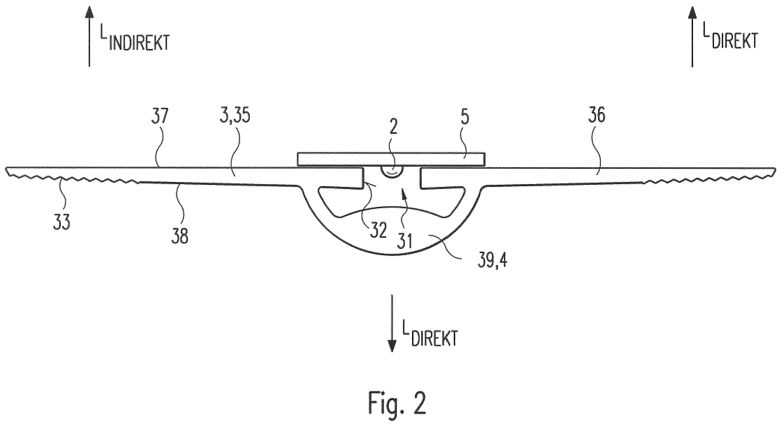

In Fig. 2 ist eine Skizze zu einem ersten Ausführungsbeispiel einer erfindungsgemäßen Leuchte gezeigt. Bei dieser Ausführung ist die Lichtleiter-Anordnung 3 vorzugsweise profilförmig gestaltet. Fig. 2 zeigt dabei einen Querschnitt normal zur Längserstreckung des entsprechenden Profils. Die Öffnung 31 kann dementsprechend als länglicher Schlitz gebildet sein, der sich insbesondere parallel zur Längserstreckung der Lichtleiter-Anordnung 3 erstreckt.

Die Lichtleiter-Anordnung 3 weist bei dieser Ausführung einen ersten plattenförmigen Teilbereich 35 und einen zweiten plattenförmigen Teilbereich 36 auf. Die Öffnung 31 bzw. der Spalt ist dabei zwischen diesen beiden plattenförmigen Teilbereichen 35, 36 ausgebildet bzw. durch Letztere begrenzt.

Weiterhin weist die Lichtleiter-Anordnung 3 bei dieser Ausführung eine Auskoppelstruktur 33 auf, die zur Abgabe des zweiten Teils *L2* des Lichts dient. Im gezeigten Beispiel weist die Flachseite 37, über die der zweite Teil *L2* des Lichts abgegeben wird, nach oben. Die Auskoppelstruktur 33 kann - wie in Fig. 2 angedeutet - auf einem, der Flachseite 37 gegenüberliegenden Außenflächenbereich der Lichtleiter-Anordnung 3 ausgebildet sein, beispielsweise herstellungstechnisch vorteilhaft profilartig bzw. profiliert. Die Auskoppelstruktur kann dementsprechend insbesondere an dem ersten plattenförmigen Teilbereich 35 der Lichtleiter-Anordnung 3 ausgebildet sein. Eine analoge weitere Auskoppelstruktur ist vorzugsweise an dem zweiten plattenförmigen Teilbereich 36 der Lichtleiter-Anordnung 3 ausgebildet. Insgesamt ist die Lichtleiter-Anordnung 3 vorzugsweise symmetrisch mit Bezug auf eine, durch die LED-Lichtquelle 2 verlaufende Vertikal-Ebene ausgebildet.

Die Auskopplung des zweiten Teils *L2* des Lichts erfolgt in diesem Beispiel also mit Bezug auf die LED-Lichtquelle 2 an einer entfernten Stelle, insbesondere an einer Stelle außerhalb der horizontalen Erstreckung der Platine 5.

Bei der gezeigten Ausführung ist somit der zweite Teil *L2* des Lichts zur Erzeugung einer Indirekt-Beleuchtung vorgesehen und in Fig. 2 dementsprechend mit *L_{INDIREKT}* bezeichnet.

Weiterhin weist die Lichtleiter-Anordnung 3 bei dieser Ausführung - wie oben bereits erwähnt - ein optisches Element 4 zur Beeinflussung des ersten Teils *L1* des Lichts auf. Im gezeigten Beispiel ist dieses optische Element 4 durch einen Mittelteil 39 der Lichtleiter-Anordnung 3 gebildet. Auf diese Weise lässt sich die Lichtleiter-Anordnung 3 vorteilhaft als einstückig ausgebildetes Bauteil, insbesondere Profilteil gestalten, indem die beiden plattenförmigen Teilbereiche 35, 36 über den Mittelteil 39 mechanisch stabil verbunden sind. Beispielsweise kann es sich bei der Lichtleiter-Anordnung 3 herstellungstechnisch vorteilhaft um ein Extrusionsprofil handeln.

Das optische Element 4 beeinflusst den ersten Teil *L1* des Lichts so, dass dieser Teil zur Erzeugung einer Direkt-Beleuchtung vorgesehen ist, wie in Fig. 2 mit *L_{DIREKT}* bezeichnet.

Im gezeigten Beispiel bilden die Flachseite 37 und das optische Element 4 Außenflächen der Leuchte. Dementsprechend ist die Leuchte so gestaltet, dass der erste Teil *L1* des Lichts von der Leuchte zur Erzeugung der Direkt-Beleuchtung *L_{DIREKT}* abgegeben wird und der zweite Teil *L2* des Lichts von der Leuchte zur Erzeugung der Indirekt-Beleuchtung *L_{INDIREKT}.*

Die Leuchte kann besonders geeignet als Pendelleuchte gestaltet sein und dementsprechend (in Fig. 2 nicht gezeigte) Aufhänge-Elemente aufweisen. Alternativ kann die Leuchte beispielsweise als Stehleuchte gestaltet sein.

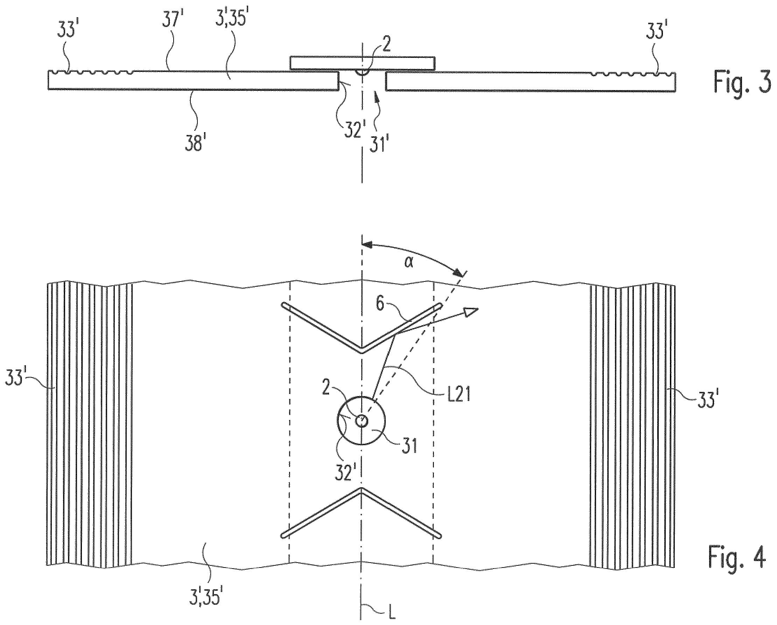

In Fig. 3 ist ein Querschnitt zu einem zweiten Ausführungsbeispiel einer erfindungsgemäßen Leuchte skizziert, Fig. 4 zeigt einen eine Skizze einer Aufsicht auf einen Längsabschnitt der Leuchte.

Die Bezugszeichen sind analog zu oben gebraucht und teilweise mit einem Strich versehen, um Unterschiede zum ersten Ausführungsbeispiel deutlich zu machen.

Bei dem zweiten Ausführungsbeispiel ist die Lichtleiter-Anordnung 3' plattenförmig und dabei insbesondere profilförmig gestaltet, so dass die Lichtleiter-Anordnung 3' eine Längsachse *L* aufweist, wie in Fig. 4 gezeigt. Vorzugsweise ist die Lichtleiter-Anordnung 3' einstückig ausgestaltet, so dass sie aus einer entsprechend gestalteten Platte besteht.

Die Öffnung 31' ist durch eine Durchgangsöffnung gebildet. Vorzugsweise ist die Öffnung 31'- wie aus Fig. 4 hervorgeht - kreisförmig gestaltet, so dass ihr Umfangsrand 32' im Horizontalschnitt kreisförmig ist. Hierdurch lässt sich vorteilhaft erzielen, dass der erste Teil *L1* des Lichts in allen vertikalen Ebenen durch die LED-Lichtquelle 2 betrachtet in gleicher Weise entblendet ist. Demgegenüber ist im Fall einer länglichen, schlitzförmigen Öffnung, wie im ersten Ausführungsbeispiel gezeigt, eine entsprechende Entblendung durch die Lichtleiter-Anordnung lediglich in einer Ebene senkrecht zu der Erstreckung des Schlitzes ermöglicht. Dennoch sind natürlich auch beim zweiten Ausführungsbeispiel anderweitige Formen zur Gestaltung der Öffnung 31 möglich.

Wiederum ist eine Auskoppelstruktur 33' vorgesehen, die auf einem Oberflächenbereich der Lichtleiter-Anordnung 3' ausgebildet ist. Vorzugsweise ist die Auskoppelstruktur 33' linear ausgestaltet, wobei die Linienform der Auskoppelstruktur 33' vorzugsweise parallel zur Längsachse *L* der Lichtleiter-Anordnung 3' orientiert gebildet ist. Zur Herstellung der Öffnung 31' und der Auskoppelstruktur 33' kann vorteilhaft ein Laserschneiden bzw. eine Lasergravur vorgesehen sein. Auf diese Weise lassen sich die Öffnung 31' und die Auskoppelstruktur 33' vorteilhaft in einem Arbeitsschritt herstellen.

Wie bereits erwähnt, kann die Abgabe des zweiten Teils *L2* des Lichts nach oben und/oder nach unten vorgesehen sein, je nachdem, an welcher Stelle bzw. an welchen Stellen die Auskoppelstruktur 33' ausgebildet ist und welche Funktion sie hat. Es kann auch ergänzend oder alternativ ein reflektierendes Element zur Auskopplung des zweiten Teils *L2* des Lichts vorgesehen sein. Entsprechende Auskoppel-Mechanismen sind als solche bekannt und können hier verwendet werden.

Zur Erzielung eines besonders guten Wirkungsgrades kann die Lichtleiter-Anordnung 3' weiterhin einen Schlitz 6 aufweisen, der dazu ausgestaltet ist, einen Anteil *L21* des zweiten Teils *L2* des Lichts auf die Auskoppelstruktur 33' zu lenken, beispielsweise durch Totalreflexion. Vorzugsweise durchsetzt der Schlitz 6 dabei die Lichtleiter-Anordnung 3' vollständig.

Der Schlitz 6 ist hierzu insbesondere in Richtung der Längsachse *L* gesehen neben der Öffnung 31 ausgebildet, so dass insbesondere Lichtstrahlen des zweiten Teils *L2* des Lichts auf den Schlitz 6 treffen, die mit der Längsachse *L* einen Winkel *α* einschließen, der kleiner als ein Grenzwinkel ist, beispielsweise kleiner als 45°. Auf diese Weise lassen sich diejenigen Lichtstrahlen, die ohne den Schlitz 6 einen besonders langen Weg durch die Lichtleiter-Anordnung 3' zurücklegen würden, unter einem verkürzten Weg vorteilhaft zur Auskopplung bringen. Hierdurch lässt sich der Wirkungsgrad der Leuchte weiterhin erhöhen.

Der Schlitz 6 kann, wie in Fig. 4 angedeutet, linear ausgebildet sein bzw. lineare Abschnitte aufweisen, also abgewinkelt geformt sein oder aber gekrümmt geformt sein, insbesondere parabelförmig gekrümmt sein. Vorzugsweise ist die Formgebung des Schlitzes 6 mit Bezug auf die Längsachse *L* symmetrisch. Durch eine gekrümmte Ausgestaltung lässt sich ein besonders guter Wirkungsgrad erzielen.

Vorzugsweise weist die Lichtleiter-Anordnung 3' außerdem wenigstens eine weitere Öffnung auf, die analog zu der zuerst genannten Öffnung 31 gestaltet ist, sowie wenigstens eine weitere, ebenfalls entsprechend analog gestaltete LED-Lichtquelle, wobei jeder LED-Lichtquelle eine der Öffnungen zugeordnet ist. Die Öffnungen sind vorzugsweise mittig und dabei entlang der Längsachse *L* der Lichtleiter-Anordnung 3' ausgebildet, insbesondere äquidistant. Auf diese Weise lässt sich die Leuchte mit gleichförmiger Lichtabgabe entlang der Längsachse *L* gestalten und dabei insgesamt besonders geeignet mit variabel gestaltbarer Länge. Natürlich sind vorzugsweise in analoger Weise auch entsprechend mehrere Schlitze vorgesehen, die in ihrer Funktionsweise dem zuerst genannten Schlitz 6 entsprechen.

## Patentansprüche

1. Pendel- oder Stehleuchte, aufweisend
- eine LED-Lichtquelle (2) zur Abstrahlung eines Lichts,
- eine flächige, plattenartige Lichtleiter-Anordnung (3),
wobei die Lichtleiter-Anordnung (3) eine Öffnung (31) aufweist und die LED-Lichtquelle (2) derart angeordnet ist, dass ein erster Teil (L1) des Lichts über die Öffnung (31) nach unten abgegeben wird und ein zweiter Teil (L2) des Lichts über einen Umfangsrand (32) der Öffnung (31) in die Lichtleiter-Anordnung (3) eingekoppelt wird,
wobei die Gestaltung derart ist, dass der zweite Teil (L2) des Lichts im Weiteren über eine Flachseite (37, 38) der Lichtleiter-Anordnung (3) nach oben abgegeben wird,
wobei die Lichtleiter-Anordnung (3) einen ersten plattenförmigen Teilbereich (35) und einen zweiten plattenförmigen Teilbereich (36) aufweist, **dadurch gekennzeichnet,**
**dass** die Öffnung (31) durch einen Spalt zwischen dem ersten plattenförmigen Teilbereich (35) und dem zweiten plattenförmigen Teilbereich (36) gebildet ist, und dass die Lichtleiter-Anordnung (3) weiterhin einen Mittelteil (39) aufweist, der ein optisches Element (4) zur optischen Beeinflussung des ersten Teils (L1) des Lichts bildet, wobei das optische Element (4) eine Linse und/oder einen Reflektor umfasst.

2. Leuchte nach Anspruch 1,
bei der die LED-Lichtquelle (2) zumindest teilweise innerhalb der Öffnung (31, 31') angeordnet ist.

3. Leuchte nach Anspruch 1 oder 2,
die derart gestaltet ist, dass der erste Teil (*L1*) des Lichts zur Erzeugung einer Direkt-Beleuchtung (*L_{DIREKT}*) vorgesehen ist und der zweite Teil (*L2*) des Lichts zur Erzeugung einer Indirekt-Beleuchtung (*L_{INDIREKT}*)*.*

4. Leuchte nach einem der vorhergehenden Ansprüche,
bei der die Lichtleiter-Anordnung (3) profilförmig gestaltet ist.

5. Leuchte nach einem der vorhergehenden Ansprüche,
bei der die Lichtleiter-Anordnung (3) eine Auskoppelstruktur (33) zur Auskopplung des zweiten Teils (*L2*) des Lichts über die Flachseite (37, 38) aufweist, wobei die Auskoppelstruktur (33) vorzugsweise profilartig gestaltet ist.

6. Leuchte nach einem der vorhergehenden Ansprüche,
bei der die Lichtleiter-Anordnung (3) einstückig ausgebildet ist.

## Claims

1. A pendant- or free-standing luminaire, having
- a LED light source (2) for emitting a light,
- a flat, plate-like light-guide arrangement (3),
wherein the light-guide arrangement (3) has an opening (31) and the LED light source (2) is arranged in such a manner that a first part (L1) of the light is emitted downwards via the opening (31) and a second part (L2) of the light is coupled into the light-guide arrangement (3) via a circumferential edge (32) of the opening (31),
the design is such that the second part (L2) of the light is furthermore emitted upwards via a flat side (37, 38) of the light-guide arrangement (3),
wherein the light-guide arrangement (3) has a first plate-shaped sub-area (35) and a second plate-shaped sub-area (36), **characterized in that** the opening (31) is formed by a gap between the first plate-shaped sub-area (35) and the second plate-shaped sub-area (36),
and that the light-guide arrangement (3) furthermore has a center part (39), which forms an optical element (4) for the optical influencing of the first part (L1) of the light, wherein the optical element (4) comprises a lens and/or a reflector.

2. A luminaire according to Claim 1,
in which the LED light source (2) is arranged at least in part within the opening (31, 31').

3. A luminaire according to Claim 1 or 2,
which is designed in such a manner that the first part (L1) of the light is provided for generating a direct-lighting (L_{DIRECT}) and the second part (L2) of the light for generating an indirect-lighting (L_{INDIRECT}).

4. A luminaire according to any one of the preceding claims,
in which the light-guide arrangement (3) is profile-shaped.

5. A luminaire according to any one of the preceding claims,
in which the light-guide arrangement (3) has a decoupling structure (33) for decoupling the second part (L2) of the light via the flat side (37, 38), wherein the decoupling structure (33) is preferably designed in a profile-like manner.

6. A luminaire according to any one of the preceding claims,
in which the light-guide arrangement (3) is designed in one piece.

## Revendications

1. Luminaire suspendu ou sur pied, présentant
- une source lumineuse à LED (2) destinée à l'émission d'une lumière,
- un agencement de guide de lumière (3) plat en forme de plaque,
l'agencement de guide de lumière (3) présentant une ouverture (31), et la source lumineuse à LED (2) étant disposée de telle sorte qu'une première partie (L1) de la lumière est délivrée vers le bas par le biais de l'ouverture (31), et une deuxième partie (L2) de la lumière étant injectée dans l'agencement de guide de lumière (3) par le biais d'un bord circonférentiel (32) de l'ouverture (31),
la conception est telle que la deuxième partie (L2) de la lumière est en outre délivrée vers le haut par le biais d'un côté plat (37, 38) de l'agencement de guide de lumière (3),
l'agencement de guide de lumière (3) présentant une première zone partielle (35) en forme de plaque et une deuxième zone partielle (36) en forme de plaque,
**caractérisé en ce que**
l'ouverture (31) est formée par un interstice entre la première zone partielle (35) en forme de plaque et la deuxième zone partielle (36) en forme de plaque,
et
**en ce que** l'agencement de guide de lumière (3) présente en outre une partie centrale (39) qui comprend un élément optique (4) destiné à influencer optiquement la première partie (L1) de la lumière, l'élément optique (4) comprenant une lentille et/ou un réflecteur.

2. Luminaire selon la revendication 1,
dans lequel la source lumineuse à LED (2) est disposée au moins partiellement à l'intérieur de l'ouverture (31, 31').

3. Luminaire selon la revendication 1 ou 2,
qui est formé de telle sorte que la première partie (*L1*) de la lumière est prévue pour la production d'un éclairage direct (*L_{DIREKT}*) et la deuxième partie (*L2*) de la lumière pour la production d'un éclairage indirect (*L_{INDIREKT}*)*.*

4. Luminaire selon l'une des revendications précédentes,
dans lequel l'agencement de guide de lumière (3) est formé en forme de profilé.

5. Luminaire selon l'une des revendications précédentes,
dans lequel l'agencement de guide de lumière (3) présente une structure de désaccouplement (33) pour le désaccouplement de la deuxième partie (*L2*) de la lumière par le biais du côté plat (37, 38), la structure de désaccouplement (33) étant de préférence formée à la façon d'un profilé.

6. Luminaire selon l'une des revendications précédentes,
dans lequel l'agencement de guide de lumière (3) est constitué d'une seule pièce.
